# EUROPEAN PATENT SPECIFICATION

(11) **EP 3 664 909 B1**
(45) Date of publication and mention of the grant of the patent: **19.05.2021**
(21) Application number: 18748946.3
(22) Date of filing: 08.08.2018
(51) Int. Cl.: B01D 25/164, B01D 25/21, B01D 25/30

(54) **IMPROVED FILTER PRESS PLATE**
VERBESSERTE FILTERPRESSENPLATTE
PLAQUE DE FILTRE AMÉLIORÉE

(30) Priority: 10.08.2017 IT 201700092724
(43) Date of publication of application: 17.06.2020
(73) Proprietor: Diemme Soil Washing S.R.L., 48022 Lugo (RA) (IT)
(72) Inventor: MELANDRI, Primo, 48022 Lugo (RA) (IT)
(74) Representative: Antonucci, Emanuele
(86) International application number: PCT/EP2018/071539
(87) International publication number: WO 2019/030299

(56) References cited:
- WO-A1-2004/024290
- WO-A1-2016/097839
- DE-U1-202012 103 558

## Description

### Field of application

The present invention relates to a filter press plate.

The above plate applies in different industrial fields using the above filter press machines, for instance the water treatment field, the chemical/pharmaceutical field and the mining field.

### Background art

The filter press is an industrial equipment for the widely used discontinuous filtering, especially for the extraction of the liquid phase from homogeneous mixtures with prevailing solid phase (slurry).

The filter presses known in the art, which can differ from each other even considerably both in dimensions, technical details and intended use, have all similar structure and same operating principle.

The structure provides a sequence of plates (plate pack) that are guided by slide bars and are arranged to be maintained in a packed position by a hydraulic cylinder. Each plate has two concave faces, namely two symmetrically opposite surfaces covered with a filtering cloth, which form a filtering chamber bordered by filtering cloths between one plate and another.

During the operation of the filter press, a two-phase liquid-solid material, such as a slurry, is sucked by a pumping station and pushed into each chamber through appropriate inlet openings, filling it up.

As the material is pushed under pressure into the different chambers that are bordered by filtering cloths, the liquid phase is progressively pushed beyond the interface of the cloth itself which retains the solid particles. Therefore, in the different chambers, solid cakes of material are formed, which cakes can be extracted upon opening of the filter press, whereas the filtered liquid phase can be collected by an appropriate hydraulic line.

A particular type of plates, called membrane plates, provide a flexible diaphragm covering the concave surfaces that border the filtering chambers. Such plates allow performing an additional drainage of the cakes.

Particularly, after the filtering phase previously described, the space between the plate's concave surface and the diaphragm is filled up with a pressurized fluid that causes a lateral swelling of the diaphragm itself. This way the diaphragm exerts a lateral squeezing action on the cake further compacting the solids and letting out a liquid surplus still present.

As partially mentioned previously, the filter press plates known in the field are generally defined by a panel characterized by two opposite surfaces that can be specular and substantially concave, peripherally surrounded by a frame projecting with respect to both surfaces.

Such plates are usually made of a single rigid material, such as cast iron or steel; because of productive and logistical economy, today's most used plates are made of polypropylene.

Though they are advantageous under many aspects and substantially meet nowadays needs of this field, still the filter press plates known in the art have some drawbacks that have not yet been solved.

As the skilled persons know, one of the primary project constraints of a filter press plate is connected to the need for a reasonable structural resistance, particularly of the partition wall between subsequent chambers. As a matter of fact, especially during the feeding phase of the slurry to the filter press, pressure gradients build between a chamber and the subsequent one, which gradients may be significant in case of low viscosity materials. Thus, the thickness of the partition wall has to be widely sized.

The relatively high thickness of the wall significantly influences the whole plate's axial dimensions: bear in mind that in case of a conventional polypropylene plate, the partition wall generally represents more than 50% of the overall thickness of the element. Certainly, as a non-skilled person will easily understand, the axial dimensions given by the single wall multiplies by the number of plates in the pack, so that the overall impact on the length of the whole filter press machine is considerable.

In industrial machines that may be even many tens meters long, most of such dimension does not relate to the thickness of the filtering chambers and does not contribute to the equipment's effectiveness.

Additionally, even though the polypropylene has a lower specific weight compared to metal materials used in the past, today the whole plate pack still contributes significantly to the weight and overall cost of the machine.

A further drawback is connected to the plate's mechanical strength in case of extraordinary pressure increase that may occur within the filtering chambers. Indeed, although the polypropylene plates guarantee a proper mechanical seal during the normal operation of the machine, they are highly liable to breaking in case of a fast increase of the differential pressure between the filtering chambers due to the clogging of the feed channel.

Another drawback is instead connected to the difficulties occurred during the detachment phase of the cakes that, when the plates are parted from each other, remain adherent to the cloth.

Because of the drawbacks that the filter press plates still have today, the need arises to design plates that allow reducing overall costs, weights and dimensions of the current machines.

Filter press plates according to the prior art are disclosed, for instance, in documents WO 2004/024290 A and WO 2016/097839 A.

The technical problem underlying the present invention is to conceive a filter press plate that solves at least some of the problems previously mentioned and that particularly guarantees a reduction of dimensions and costs of the filter press machine for a given volume of treated material, ensuring a proper mechanical seal during the operation, besides reducing the risk of breakage in case of clogging and facilitate the detachment of the cakes.

### Summary of the invention

The solution idea underlying the present invention is to implement a filter press plate, wherein the partition wall is made of an elastic material with high mechanical strength properties.

Based on that solution idea, the previously identified technical problem is solved by a filter press machine, adapted to be interposed in use to adjacent plates of a plate pack defining, along with said plates, an upstream filtering chamber and a downstream filtering chamber; said plate comprising:
a solid partition wall that separates, in use, said upstream filtering chamber from said downstream filtering chamber, said partition wall having a first face facing in use towards said upstream filtering chamber, and a second face opposite the first one, facing in use towards said downstream filtering chamber;
a frame placed peripherally to said partition wall and projecting with respect to at least one of said first face and second face of said partition wall, said frame being adapted to associate, in use, in contact with the adjacent plates of the plate pack;
wherein said partition wall is made of a different material compared to said frame, specifically in a composite material comprising an elastomeric matrix and at least one reinforcement material.

The solid partition may be either monolithic or composed of a plurality of juxtaposed layers.

Preferably said composite material will be constituted by a rubberized fabric combining excellent mechanical strength and a substantially elastic behaviour.

The rubberized fabric features, in a known manner, an elastomeric mixture, within which one or more reinforcement layers are embedded. The elastomeric material of the mixture can be made of a natural or synthetic rubber chosen based on the specific needs of application, such as an SBR. The mixture can provide additives that guarantee particular properties for the partition wall, such as mechanical strength or corrosion resistance, if necessary or useful. The reinforcement layer can be for instance a polyester, nylon, or other fibre fabric, or even a metal-wire reinforcement.

Particularly, said partition wall is deformable at least crosswise to said plate, elastically bending with respect to said rigid frame, even though the wall is not arranged to substantially deform during its normal use, namely during the different filtering operations of a filter press machine, on which the plate is mounted.

Conversely, the frame is preferably rigid, and can be made of a traditional building material for filter press plates, such as polypropylene or an analogous rigid plastic.

As a skilled person will easily understand, making the wall of an innovative material that is different from the frame, and particularly making it of a composite material having a reinforced elastomeric matrix, allows obtaining a wall of considerably reduced thickness compared to the plates known in the art. Indeed, even if defining a substantially fixed wall, the elastic nature of the material allows mild inflections thereof in case of high pressure gradients between contiguous chambers, thus avoiding the risks of a brittle fracture which are present in traditional rigid walls. The strengthening given by the reinforcement material conversely allows avoiding an excessive wall's flexibility, which would undermine its strength over time.

Given an equal volume of the filtering chambers, a reduction in the wall's thickness also allows reducing the thickness of the rigid frame and thus of the material used to make the frame itself.

As it is conceived, the filter press plate according to the invention has a thickness, namely lateral dimensions that are significantly less compared to the known plates. Additionally, because of the reduction in the material used to make the frame and of the reduced composite material's specific weight, the filter press plate has also a lower weight compared to the known plates.

Given an equal volume of material to be treated by a filter press, the use of filter press plates of the present invention with reduced thickness allows reducing the plate pack's dimensions and weight and thus, more generally, producing cheaper and space-saving filter press machines.

Similarly, in case of filter presses that are already in use, the user can advantageously replace the known plates with a higher number of filter press plates of the present invention, increasing this way the volume of material that can be processed by the machine.

In a concrete application example, indicated by way of example, a square-shaped filter press plate with a 1500 mm edge, made according to the present invention, can have a partition wall with only 12 mm thickness; wherein, for similar dimensions and applications, a propylene partition wall would be sized at 44 mm. It can be easily understood how significantly the axial dimension's saving influences the machine's overall length: assuming for example a 25-mm thick chamber, such overall length actually reduces by almost 50%.

It is observed that the above first face and second face of said partition wall face, in use, towards said downstream and upstream filtering chambers respectively, with a possible interposition of a flexible diaphragm in case of a plate of the membrane type. Obviously, the filtering chamber comprises anyway the filtering cloth, so that the partition wall faces - directly, or by interposition of flexible diaphragm - said cloth.

In other words, the first and second faces of the partition wall respectively define a side portion of the downstream chamber and a side portion of the upstream chamber.

Preferably, the partition wall must have enough thickness to preserve a determined functional rigidity and a good mechanical strength. In this context, a thickness greater than 2 mm is preferable, and a thickness greater than 3,5 mm is even preferable.

Said frame is preferably made of thermoplastic material, and said partition wall is peripherally embedded in said frame.

Advantageously, at least one of said first face and second face of said partition wall can comprise superficial irregularities of any shape or dimension - for example grooves or a tapping of the rubberized fabric - which facilitate the flow of a filtered liquid towards the periphery of the plate.

Particularly, said frame can comprise at least one outlet opening flowing for instance into a collecting channel transverse to the plate for collecting the filtrate.

Said partition wall can be crossed by a feed passage for the distribution of a substance to be filtered towards the upstream chamber; said feed passage being adapted, in use, to be placed in fluid communication with analogous passages of the adjacent plates. Said feed passage is preferably located centrally to the partition wall.

Alternatively, said plate can naturally feature outer or lateral feeding.

In case of central feeding, the plate can feature an abutment structure, projecting in relief from at least one of said first face and said second face and peripherally to said feed passage, arranged in use to abut against an analogous abutment structure of an adjacent plate and configurated to allow for the radial distribution of the material to be filtered within the respective filtering chamber.

In a first variant, said abutment structure is a distribution sleeve, placed at least at one of said first face and second face of said partition wall, in at least partial prosecution of said feed passage; said distribution sleeve providing at least one radial recess to allow the distribution of the substance to be filtered within the filtering chamber over which it faces. The distribution sleeves of the single plates can thus join in use to each other, so as to define a continuous channel for feeding of the material to be filtered, defining moreover, thanks to their mutual contact, a central stiffening element that avoids exceeding inflexions of the elastic wall, thus preventing possible breakages.

In a second variant, said abutment structure can be a plurality of raised buttons that are placed peripherally to said feed passage. The raised buttons, being in contact with opposite buttons of another plate, define a structural stiffening analogous to that guaranteed by said sleeve; moreover, the circumferential space between a button and the subsequent one guarantees the proper feeding of the material to be filtered. Such a second variant has advantageously lower production costs compared to the first variant.

Still with the purpose of increasing the overall mechanical strength of the partition wall, it can comprise one or more reinforcement bosses projecting with respect to at least one of said first face and second face. Particularly, said bosses can be placed in spaced-apart relation with respect to said distribution sleeve or to said raised buttons.

Further features and advantages will become clearer from the following detailed description of preferred embodiments of the present invention, but are not exclusive, with reference to the attached figures that are given for instance and not limiting to it.

### Brief description of drawings

Figure 1 shows a front view of a first embodiment of the filter press plate according to the present invention.
Figure 2 shows a perspective view of the filter press plate from the opposite side of that illustrated in figure 1.
Figure 3 shows a front view in partial transparency of the filter press plate of figure 1.
Figure 4 shows a sectional view realised along the plane K - K of the filter press plate of figure 3.
Figure 5 shows a detail L of the cross section of figure 4.
Figure 6 shows a lateral view of filter press plate of figure 1.
Figure 7 shows a sectional view realised along the plane H - H of the lateral view of figure 6.
Figure 8 shows a front view of a first embodiment of the partition wall of the filter press plate.
Figure 9 shows a lateral view of the wall in figure 8.
Figure 10 shows a front view of a second embodiment of the wall of the filter press plate.
Figure 11 shows a partially sectioned front view of a second embodiment of the filter press plate according to the present invention.
Figure 12 shows a lateral view of the filter press plate of figure 11.
Figure 13 shows a detail J of the filter press plate of figure 11.
Figure 14 shows a sectional view realised along the plane C - C of the filter press plate of figure 11.
Figure 15 shows a sectional view realised along the plane H - H of the filter press plate of figure 14.
Figure 16 shows a detail D of the sectional view of figure 14.
Figure 17 shows a perspective view of the filter press plate of figure 11.
Figure 18 shows a perspective view of a distribution ring of filter press plate of figure 1.
Figure 19 shows a front view of the distribution ring of figure 18.
Figure 20 shows a sectional view realised along the plane A - A of the distribution ring of figure 19.
Figure 21 shows a lateral view of the distribution ring of figure 18.
Figure 22 shows a rear view of the distribution ring of figure 18.
Figure 23 shows a front view of a third embodiment of the filter press plate according to the present invention.
Figure 24 shows a lateral view of the filter press plate according to the third embodiment sectioned along the plane A - A of figure 23.
Figure 25 shows a detail C of the filter press plate of figure 24.
Figure 26 shows a perspective view of the filter press plate of figure 23.

### Detailed description

With reference to the attached figures, we generally identify with 1 a first embodiment of the filter press plate according to the present invention, suitable for use in industrial filter presses for the solid-liquid separation. The following description is made with not limiting reference to the use within the context of such application.

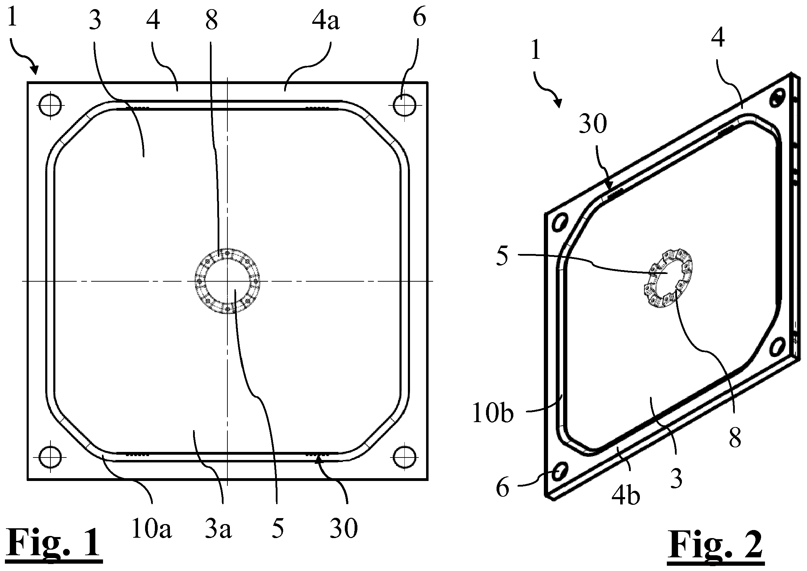

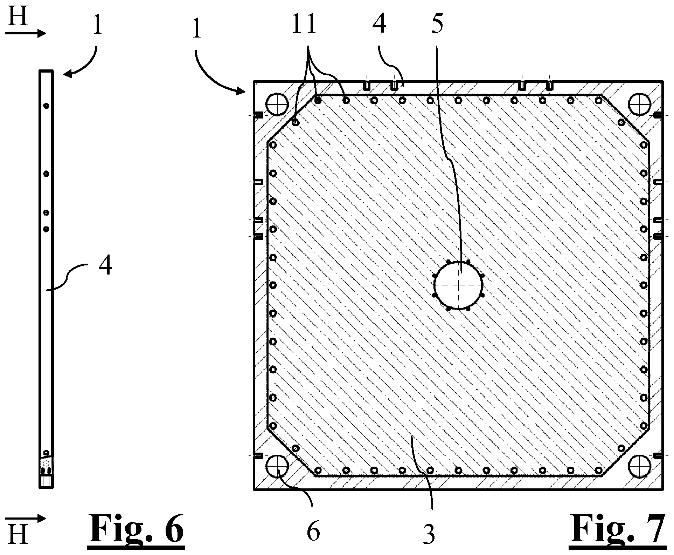

The plate 1 essentially consists of a partition wall 3 or central panel having a first face 3a that is parallel to and opposite a second face 3b. The wall 3 is peripherally embedded in an outer frame 4 projecting laterally with respect to both the first 3a face and the second 3b face of the wall 3. As you can notice from figures 1-7, the frame 4 comprises a first lateral surface 4a that is parallel to the first face 3a of the wall 3, which it connects to by a first inclined portion 10a and a second lateral surface 4b that is parallel to the second face 3b of the wall 3, which it connects to by a second inclined portion 10b. The inclined portions 10a, 10b along with the respective faces 3a, 3b define thus a concavity or recess with respect to the respective lateral surfaces 4a, 4b of the frame 4.

The filter press plate 1 is conceived to be a part of a plate pack that is used in a filter press wherein at least one plate of the pack, preferably the total amount thereof, is made according to the present invention.

The above described concavities or recesses contribute forming a first filtering chamber and a second filtering chamber respectively, namely a downstream filtering chamber and an upstream filtering chamber, when the filter press plate is interposed in contact between two other filter press plates 1 in the plate pack.

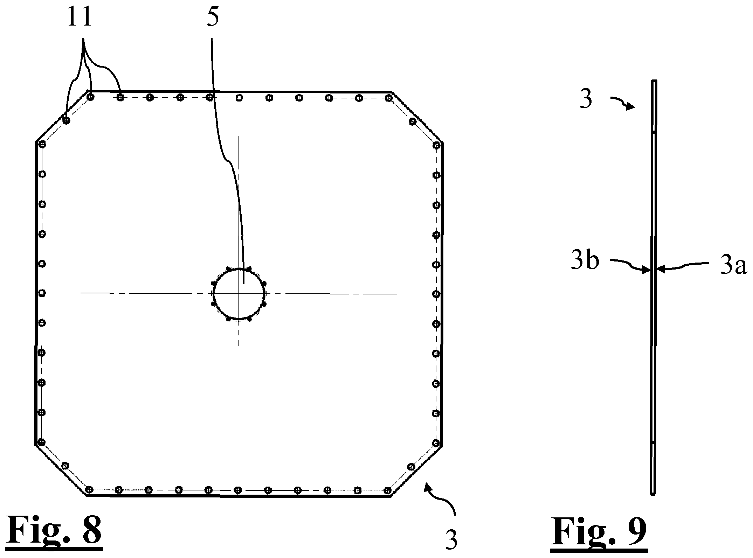

With reference to figures 8 and 9, we will now describe more in detail the features of partition wall 3.

As you may notice from figure 8 that shows a front view of the first face 3a, the wall 3 is substantially square-shaped with chamfered angles, along the perimeter of the wall 3 a plurality of anchoring holes 11 are aligned, which facilitate the fastening of the wall 3 to the frame 4. Centrally to the wall 3 is instead formed a circular feed passage 5 that is necessary for supplying the product to be filtered in the filtering chambers.

The surface of the faces 3a, 3b is characterized by the presence of superficial grooves or tapping that allow the outflow of the filtered liquid, through the filtering cloth towards the periphery of the partition wall 3, so that it can be collected through outlet openings 30 flowing into channels obtained in the frame 4.

The wall 3 advantageously consists of a rubberized fabric sheet, namely a composite material wherein one or more fabric layers, preferably made of polyester, are coated with rubber. In order to face the pressure created in the filtering chambers, the wall 3 has a thickness between 2 and 25 mm, preferably between 3,5 and 15 mm, and ideally equal to 12 mm. Such an ideal value particularly relates to a squared plate with a 1500 mm side; this value is purely indicative and widely variable, for instance based on the intended use pressure.

As you may notice from figures 1 and 2, on both faces 3a, 3b a distribution sleeve 8 is fixed directly around the feed passage 5, and in flow continuation with it.

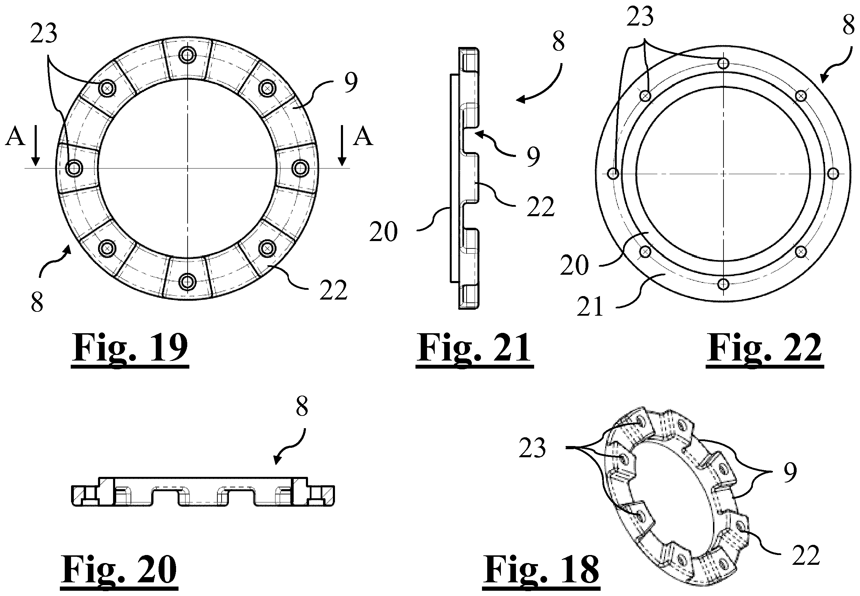

Figures 18-22 show in detail such a distribution sleeve or ring 8, which provides a tubular portion 20 that is arranged to be introduced within the inlet opening 5 and a circular flange 21 that is arranged to abut against the face 3a, 3b around the feed passage 5. The above-mentioned flange 21 provides a plurality of radial recesses 9 that are tapered in the direction of the feed passage 5 and interspersed by flat reliefs 22, at which through-holes 23 are obtained for fixing the flange 21 to the face 3a, 3b by threaded elements.

When the plate 1 is side by side in contact with the adjacent plate in the plate pack of a filter press, the flat reliefs 22 of adjacent distribution sleeves 8 come into contact. Thus, an inlet duct of the pressurized material is formed, which is given by the sequence of the distribution sleeves 8 of the plates. The radial recesses 9 of adjacent distribution sleeves 8 form feed passages of the material to be filtered from the inlet hole 5 to the filtering chambers.

It is observed that the distribution sleeves 8 that are associated with each other also contribute to a structure stiffening, thus improving the mechanical strength properties of the single partition walls 3.

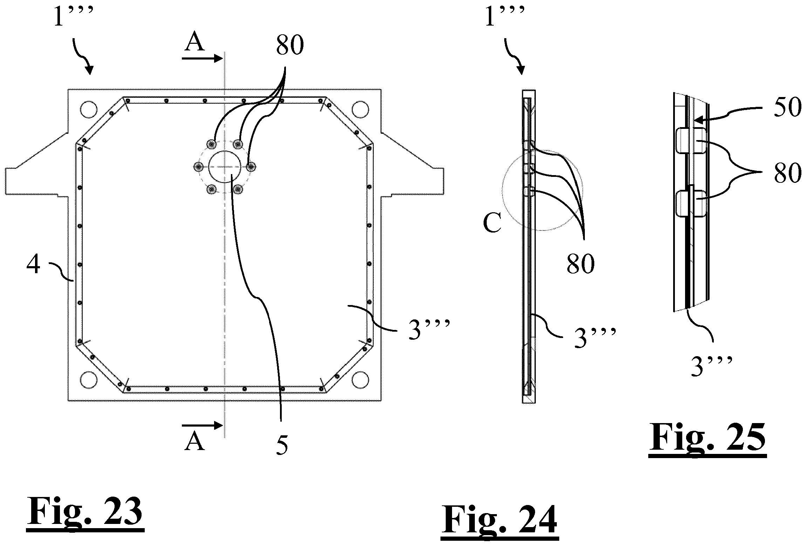

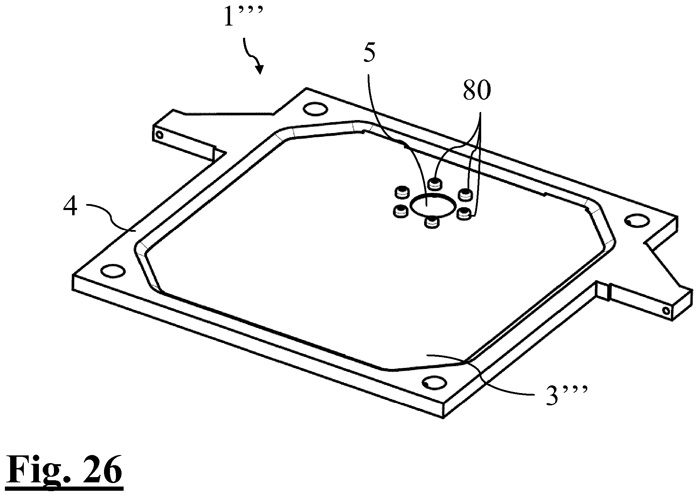

In a variant of embodiment illustrated in figures 23-26, the plate 1''' has, in place of said distribution sleeve 8, a plurality of raised buttons 80 that exert in use the same stiffening function by coming into contact with respective buttons of an adjacent plate. The circumferential gap between a button and another allows the flow of the material entering the filtering chamber.

Such raised buttons 80 are preferably projecting with respect to both faces of the partition wall 3''' and anyway arranged around the feed passage 50 that, as observed in the figure, can also be arranged in a separated position with respect to the geometrical centre of the plate 1"'.

Considering an equal capacity of the filtering chambers with respect to the prior art plates, the frame 4 has an indicative thickness, with reference to a squared plate with a 1500 mm side, comprised between 22 and 70 mm, preferably between 41 and 50 mm, and even preferably equal to 47 mm for the chamber 35.

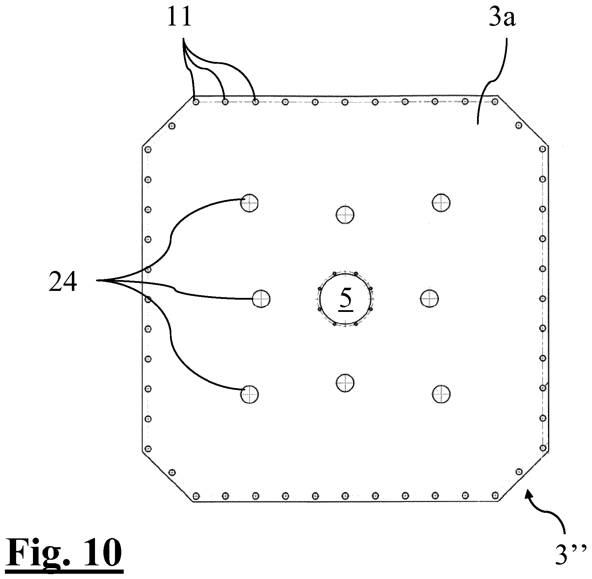

Figure 10 shows an alternative embodiment 3" of the wall that differentiates from the wall 3 only because on the first face 3a and the second face 3b (not shown) some bosses are fixed, which act as stiffening elements 24 that are adapted to locally increase the mechanical strength of the wall 3" in order to face the pressure peaks that form within the filtering chambers.

With reference to figures 1-8, we will now describe the technical features of the frame 4 of the filter press plate 1.

Firstly, we notice that the frame 4 has a substantially squared shape and a greater thickness compared to the wall 3. Additionally, the frame 4 is made of a rigid and preferably thermoplastic material, such as polypropylene.

At the four vertexes of the frame 4, as many through-collecting channels 6 are made. When the filter press plate 1 is side by side in contact with the adjacent filter press plate in the plate pack of a filter press, the collecting channel 6 of a plate coincide in fluid communication with the corresponding collecting channels of the adjacent plates. Thus, they form a duct that is extended crosswise to the plates for the draining of the filtered liquid in the filtering chambers.

Additionally, at the inclined portions 4a, 4b and close to each of the collecting channels 6, a group of channels is obtained, which flow over outlet openings 30 and which are arranged parallel adjacent to the portion of the first face 3a and second face 3b that is embedded in the frame 4, and which are arranged for collecting the liquid filtered by the filtering cloth and flowed out up to the perimeter of the faces 3a, 3b of the wall 3 in the superficial grooves provided on it.

Downstream each group of channels a draining duct 31 is placed, which flows transversely to the group of channels and parallel adjacent to the portion of the first face 3a and second face 3b embedded in the frame 4. The draining duct 31 is placed in fluid communication with the corresponding collecting channel 6.

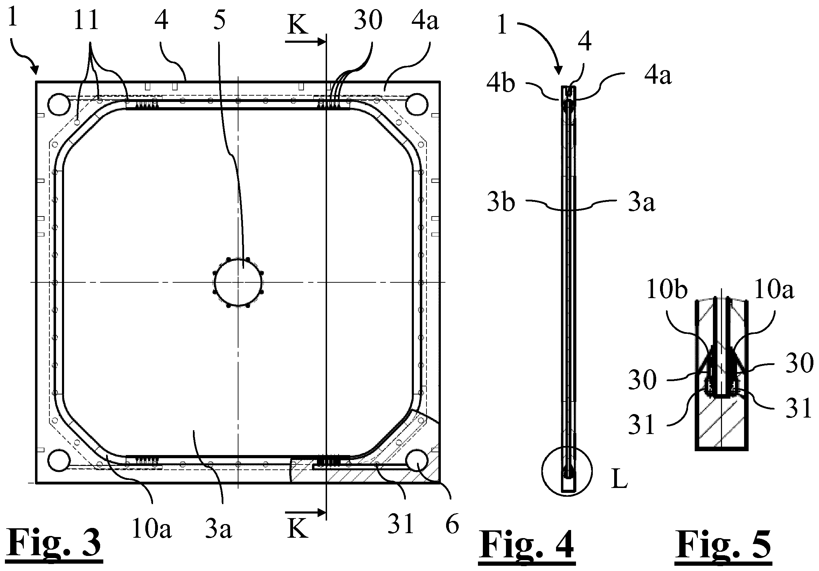

Figure 3 shows the groups of channels of the first inclined portion 4a and the corresponding draining ducts 31. As one may notice from the detail L of the section K-K of figure 5, the groups of channels that open over the second inclined portion 4b and the respective draining ducts 31 are placed specular to those shown in figure 3 on the other side of the portion of the wall 3 that is embedded in the frame 4.

The filter press plate 1 can obviously be made of different sizes based on the dimensions of the filter press and thus of the quantitative of the volume of material to be processed in a work cycle of the machine.

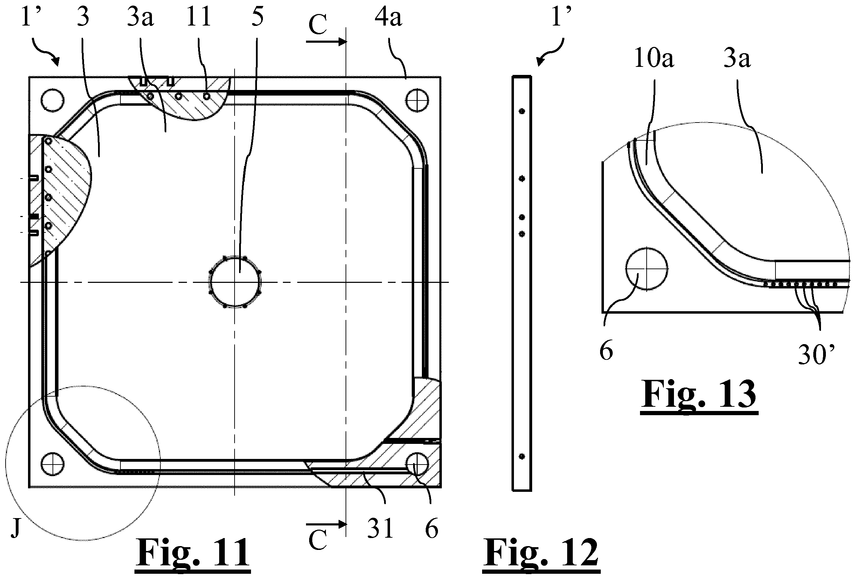

Figures 11-17 show an alternative embodiment 1' of the filter press plate that differentiates from the preceding embodiment mainly in that it allows the mounting of a first deformable membrane and a second deformable membrane, on both sides of the filter press plate 1' that covers the first face 3a and second face 3b of the wall 3. As in the case of the prior art plates, the deformable membranes are diaphragms that are inflated to perform the phase of further pressing of the cake.

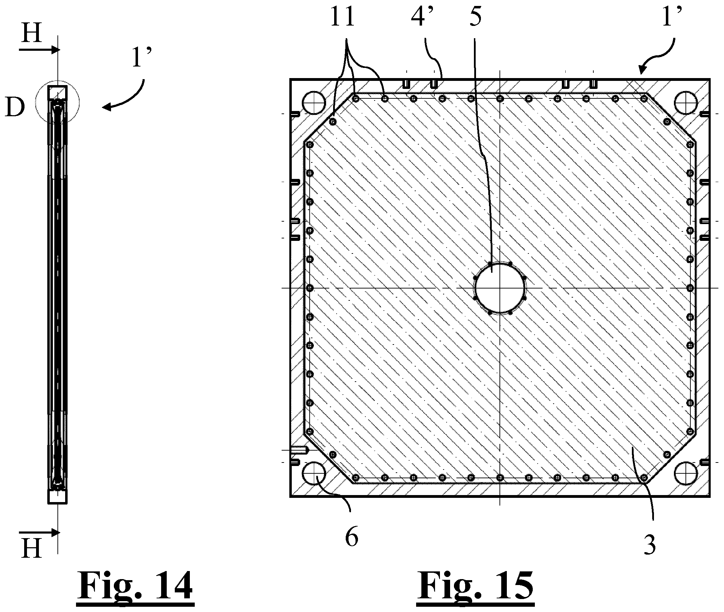

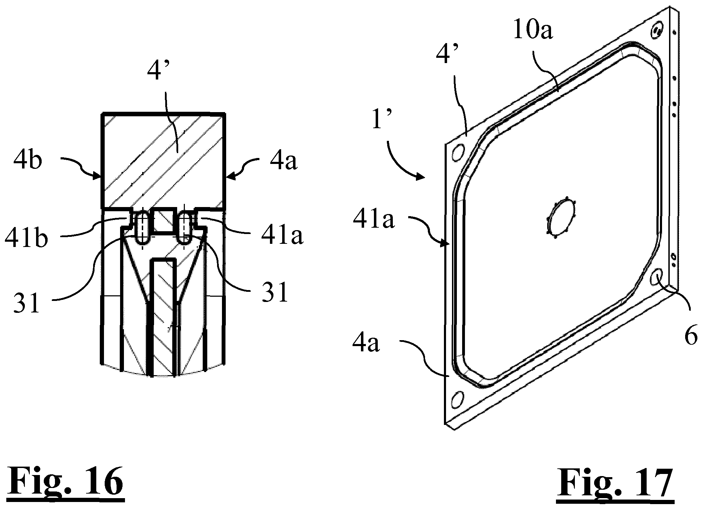

As you can notice from the section H - H shown in figure 15 and from the detail D of figure 16, the frame 4' of the filter press plate 1' has a cross section with a slightly different morphology with respect to the frame 4. Indeed, the tapering 4a, 4b are preceded respectively by a first recess 41a and a second recess 41b running along the frame 4'. The deformable membranes, not shown as they are already known, peripherally insert within the above recesses 41a, 41b covering the respective face 3a, 3b of the plate 1'.

In the present embodiment, the groups of channels flowing into the outlet openings 30' open over the bottom of the recesses 41a and 41b and are perpendicularly arranged to the first and second lateral surfaces 4a, 4b of the frame 4'. As you may notice from the detail D of figure 16, the groups of channels flow directly into the corresponding draining duct 31 that in this case runs along the frame 4' until it joins the corresponding collecting channel 6.

In the present embodiment, the frame 4' has a greater thickness compared to the frame 4, but still less compared to the membrane plates known in the art.

The filter press plate 1, 1' according to the present invention solves the technical problem and numerous advantages derive therefrom.

Unlike the other filter press plates known in the art, mainly entirely made of polypropylene, the filter press plate according to the present invention has a wall that is made of a composite material such as rubberized fabric that has a lower specific weight compared to polypropylene, and mechanical features allowing to resist the pressures occurring within the filtering chambers because of lower thicknesses of the wall with respect to the plates known in the art. Additionally, the elastic properties of the rubberized fabric are such as to reduce the risk of break-up of the wall in case of clogging.

Thanks to the use of the rubberized fabric and thus of a partition wall with reduced thickness, given an equal dimension of the filtering chambers, also the frame of the filter press plate according to the invention has a reduced thickness with respect to the known plates with consequent overall reduction in the cross dimension of the single plate.

The use of a plurality of filter press plates according to the invention allows having, given an equal volume of treated material, a plate pack with low dimensions and weight, with a consequent significant reduction in the dimensions and overall cost of the produced filter press machine.

Additionally, the filter press plates of the present invention can be used in place of the known plates used in already existing filter press machines. In that case, the use of plates with reduced thickness allows increasing the volume of material that can be treated by the machine.

Advantageously, the wall of the filter press plate has a certain flexibility degree given by the rubber. The wall's flexibility can be exploited to facilitate the detachment of the cake from the filtering cloth.

Advantageously, the filter press plate can also be of the membrane type, namely it can provide a flexible diaphragm coating both wall's faces, even though maintaining reduced thicknesses with respect to the membrane plates known in the art.

Obviously, a skilled person, with the purpose of meeting contiguous and specific needs, may apply to the above-mentioned invention numerous changes and variants, all however within the scope of protection of the invention defined by the following claims.

## Claims

1. Filter press plate (1; 1'; 1'''), adapted to be interposed in use to adjacent plates of a plate pack defining, along with said plates, an upstream filtering chamber and a downstream filtering chamber; said plate (1; 1'; 1''') comprising:
a solid partition wall (3; 3"; 3''') that separates, in use, said upstream filtering chamber from said downstream filtering chamber, said partition wall (3; 3"; 3''') having a first face (3a) facing in use towards said upstream filtering chamber, and a second face (3b) opposite the first one, facing in use towards said downstream filtering chamber; wherein, in use, said first (3a) and said second (3b) faces of said partition wall (3; 3"; 3") define a side portion of said downstream and upstream filtering chambers respectively;
a frame (4; 4') placed peripherally to said partition wall (3; 3"; 3''') and projecting with respect to at least one of said first (3a) and second (3b) faces of said partition wall (3; 3"; 3'''), said frame (4; 4') being adapted to associate, in use, in contact with the adjacent plates of the plate pack;
**characterized in that** said partition wall (3; 3"; 3''') is made of a different material from that of said frame (4; 4'), said partition wall (3; 3"; 3''') being made of a composite material comprising an elastomeric matrix and at least one reinforcement material.

2. Plate (1; 1'; 1''') according to one of the preceding claims, wherein said partition wall (3; 3") has a thickness greater than 2 mm.

3. Plate (1; 1'; 1''') according to one of the preceding claims, wherein said composite material is a rubberized fabric.

4. Plate (1; 1'; 1''') according to one of the preceding claims, wherein said frame (4, 4') is made of thermoplastic material and said partition wall (3; 3"; 3''') is peripherally embedded in said frame (4; 4').

5. Plate (1; 1'; 1''') according to one of the preceding claims, wherein at least one of said first (3a) and said second (3b) faces of said partition wall (3; 3"; 3''') comprises superficial irregularities that facilitate the flow of filtered liquid towards the periphery of the plate (1; 1'; 1''').

6. Plate (1; 1'; 1''') according to claim 5, wherein said frame (4; 4') comprises at least one outlet opening (30; 30') flowing into a collecting channel (6) for collecting the filtrate.

7. Plate (1; 1'; 1''') according to one of the preceding claims, wherein said partition wall (3; 3"; 3''') is crossed by a feed passage (5) for the distribution of a substance to be filtered towards the upstream chamber; said feed passage (5) being adapted, in use, to be placed in fluid communication with analogous passages of the adjacent plates.

8. Plate (1; 1'; 1''') according to claim 7 comprising at least one abutment structure (8; 80), projecting in relief from at least one of said first face (3a) and second face (3b) and peripherally to said feed passage (5), arranged in use to abut against an analogous abutment structure (8, 80) of an adjacent plate and configured to allow the radial distribution of the material to be filtered within the respective filtering chamber.

9. Plate (1; 1'; 1''') according to claim 8, wherein said abutment structure (8; 80) is a distribution sleeve (8) placed in at least partial prosecution of said feed passage (5); said distribution sleeve (8) providing at least one radial recess (9) to allow the distribution of the substance to be filtered within the filtering chamber on which it faces.

10. Plate (1; 1'; 1''') according to claim 8, wherein said abutment structure (8; 80) is a plurality of raised buttons (80) placed peripherally to said feed passage (5).

11. Plate (1; 1'; 1''') according to one of the preceding claims, wherein said partition wall (3") comprises at least one reinforcement boss (24) projecting with respect to at least one of said first (3a) and second (3b) face of said partition wall (3"), adapted to increase the overall mechanical strength of said partition wall (3").

## Patentansprüche

1. Filterpressplatte (1; 1', 1'''), die dafür ausgelegt ist, im Gebrauch zwischen benachbarte Platten einer Plattenbaugruppe, die zusammen mit den Platten eine stromaufseitige Filterkammer und eine stromabseitige Filterkammer definiert, eingefügt zu werden; wobei die Platte (1; 1'; 1''') Folgendes umfasst:
eine feste Trennwand (3; 3"; 3'''), die im Gebrauch die stromaufseitige Filterkammer von der stromaufseitigen Filterkammer trennt, wobei die Trennwand (3; 3"; 3''') eine erste Fläche (3a), die im Gebrauch der stromaufseitigen Filterkammer zugewandt ist, und eine zweite Fläche (3b) gegenüber der ersten Fläche, die im Gebrauch der stromabseitigen Filterkammer zugewandt ist; wobei im Gebrauch die erste (3a) und die zweite (3b) Fläche der Trennwand (3; 3"; 3"') einen Seitenabschnitt der stromabseitigen bzw. der stromaufseitigen Filterkammer definieren;
einen Rahmen (4; 4'), der am Umfang der Trennwand (3; 3"; 3''') angeordnet ist und in Bezug auf die erste (3a) und/oder die zweite (3b) Fläche der Trennwand (3; 3"; 3"') vorsteht, wobei der Rahmen (4; 4') dafür ausgelegt ist, im Gebrauch mit den benachbarten Platten der Plattenbaugruppe verbunden zu werden,
**dadurch gekennzeichnet, dass** die Trennwand (3; 3"; 3''') aus einem anderen Material als jenem des Rahmens (4; 4') hergestellt ist, wobei die Trennwand (3; 3"; 3''') aus einem Verbundwerkstoff hergestellt ist, der einen elastomeren Grundstoff und wenigstens ein Verstärkungsmaterial enthält.

2. Platte (1; 1'; 1''') nach einem der vorhergehenden Ansprüche, wobei die Trennwand (3; 3") eine Dicke von mehr als 2 mm hat.

3. Platte (1; 1'; 1''') nach einem der vorhergehenden Ansprüche, wobei der Verbundwerkstoff ein gummiertes Gewebe ist.

4. Platte (1; 1'; 1''') nach einem der vorhergehenden Ansprüche, wobei der Rahmen (4; 4') aus einem thermoplastischen Material hergestellt ist und die Trennwand (3; 3"; 3''') an ihrem Umfang in den Rahmen (4; 4') eingebettet ist.

5. Platte (1; 1'; 1''') nach einem der vorhergehenden Ansprüche, wobei die erste (3a) und/oder die zweite (3b) Fläche der Trennwand (3; 3" 3''') auf ihrer Oberfläche Unregelmäßigkeiten aufweisen, die den Fluss von gefilterter Flüssigkeit zum Umfang der Platte (1; 1'; 1''') erleichtern.

6. Platte (1; 1'; 1''') nach Anspruch 5, wobei der Rahmen (4; 4') wenigstens eine Auslassöffnung (30; 30') aufweist, die in einen Sammelkanal (6) mündet, um das Filtrat zu sammeln.

7. Platte (1; 1'; 1''') nach einem der vorhergehenden Ansprüche, wobei durch die Trennwand (3; 3"; 3''') ein Beschickungsdurchlass (5) verläuft, um eine zu filternde Substanz an die stromaufseitige Kammer zu verteilen; wobei der Beschickungsdurchlass (5) dafür ausgelegt ist, im Gebrauch in einer Fluidkommunikation mit analogen Durchlässen der benachbarten Platten angeordnet zu werden.

8. Platte (1; 1'; 1''') nach Anspruch 7, die wenigstens eine Anschlagstruktur (8; 80) aufweist, die im Relief von der ersten Fläche (3a) und/oder der zweiten Fläche (3b) und in Umfangsrichtung zu dem Beschickungsdurchlass (5) vorsteht und dafür ausgelegt ist, im Gebrauch an einer analogen Anschlagstruktur (8; 80) einer benachbarten Platte anzuschlagen, und konfiguriert ist, die radiale Verteilung des zu filternden Materials in der entsprechenden Filterkammer zuzulassen.

9. Platte (1; 1'; 1''') nach Anspruch 8, wobei die Anschlagstruktur (8; 80) eine Verteilungshülse (8) ist, die als wenigstens teilweise Verlängerung des Beschickungsdurchlasses (5) angeordnet ist; wobei die Verteilungshülse (8) wenigstens eine radiale Aussparung (9) bereitstellt, um die Verteilung der zu filternden Substanz in der Filterkammer, der sie zugewandt ist, zuzulassen.

10. Platte (1; 1', 1''') nach Anspruch 8, wobei die Anschlagstruktur (8; 80) mehrere Erhebungen (80) umfasst, die in Umfangsrichtung des Beschickungsdurchlasses (5) angeordnet sind.

11. Platte (1; 1', 1''') nach einem der vorhergehenden Ansprüche, wobei die Trennwand (3") wenigstens einen Verstärkungswulst (24) aufweist, der in Bezug auf die erste (3a) und/oder die zweite (3b) Fläche der Trennwand (3") vorsteht und dafür ausgelegt ist, die mechanische Gesamtfestigkeit der Trennwand (3") zu erhöhen.

## Revendications

1. Plaque de presse-filtre (1 ; 1' ; 1'''), adaptée pour être interposée, en utilisation, sur des plaques adjacentes d'un bloc de plaques définissant, avec lesdites plaques, une chambre de filtrage amont et une chambre de filtrage aval ; ladite plaque de presse-filtre (1 ; 1' ; 1''') comprenant :
une paroi de séparation pleine (3 ; 3" ; 3''') qui sépare, en utilisation, ladite chambre de filtrage amont de ladite chambre de filtrage aval, ladite paroi de séparation (3 ; 3" ; 3''') comportant une première face (3a) tournée, en utilisation, vers ladite chambre de filtrage amont, et une seconde face (3b) opposée à la première, tournée, en utilisation, vers ladite chambre de filtrage aval ; dans laquelle, en utilisation, lesdites première (3a) et seconde (3b) faces de ladite paroi de séparation (3 ; 3" ; 3''') définissent une partie latérale desdites chambres de filtrage aval et amont respectivement ;
un cadre (4 ; 4') placé de manière périphérique à ladite paroi de séparation (3 ; 3" ; 3''') et se projetant par rapport à au moins une parmi lesdites première (3a) et seconde (3b) faces de ladite paroi de séparation (3 ; 3" ; 3'''), ledit cadre (4 ; 4') étant adapté pour s'associer, en utilisation, en contact avec les plaques adjacentes du bloc de plaques ;
**caractérisée en ce que** ladite paroi de séparation (3 ; 3" ; 3''') est composée d'un matériau différent de celui dudit cadre (4 ; 4'), ladite paroi de séparation (3 ; 3" ; 3''') étant composée d'un matériau composite comprenant une matrice élastomère et au moins un matériau de renforcement.

2. Plaque (1 ; 1' ; 1''') selon l'une des revendications précédentes, dans laquelle ladite paroi de séparation (3 ; 3") présente une épaisseur supérieure à 2 mm.

3. Plaque (1 ; 1' ; 1''') selon l'une des revendications précédentes, dans laquelle ledit matériau composite est un tissu caoutchouté.

4. Plaque (1 ; 1' ; 1''') selon l'une des revendications précédentes, dans laquelle ledit cadre (4 ; 4') est composé d'un matériau thermoplastique et ladite paroi de séparation (3 ; 3" ; 3''') est incorporé de manière périphérique dans ledit cadre (4 ; 4').

5. Plaque (1 ; 1' ; 1''') selon l'une des revendications précédentes, dans laquelle au moins une parmi lesdites première (3a) et seconde (3b) faces de ladite paroi de séparation (3 ; 3" ; 3''') comprend des irrégularités superficielles qui facilitent l'écoulement de liquide filtré vers la périphérie de la plaque (1 ; 1' ; 1''').

6. Plaque (1 ; 1' ; 1''') selon la revendication 5, dans laquelle ledit cadre (4 ; 4') comprend au moins une ouverture de sortie (30 ; 30') s'écoulant dans un canal de collecte (6) destiné à collecter le filtrat.

7. Plaque (1 ; 1' ; 1''') selon l'une des revendications précédentes, dans laquelle ladite paroi de séparation (3 ; 3" ; 3''') est coupée par un passage d'alimentation (5) destiné à la distribution d'une substance à filtrer vers la chambre amont ; ledit passage d'alimentation (5) étant adapté, en utilisation, pour être placé en communication fluidique avec des passages analogues des plaques adjacentes.

8. Plaque (1 ; 1' ; 1''') selon la revendication 7 comprenant au moins une structure de butée (8 ; 80), se projetant en relief depuis au moins une parmi lesdites première face (3a) et seconde face (3b) et de manière périphérique audit passage d'alimentation (5), agencée, en utilisation, pour venir buter contre une structure de butée analogue (8, 80) d'une plaque adjacente et configurée pour permettre la distribution radiale du matériau à filtrer dans la chambre de filtrage respective.

9. Plaque (1 ; 1' ; 1''') selon la revendication 8, dans laquelle ladite structure de butée (8 ; 80) est un manchon de distribution (8) placé dans en poursuite au moins partielle dudit passage d'alimentation (5) ; ledit manchon de distribution (8) offrant au moins un évidement radial (9) pour permettre la distribution de la substance à filtrer dans la chambre de filtrage vers laquelle il est tourné.

10. Plaque (1 ; 1' ; 1''') selon la revendication 8, dans laquelle ladite structure de butée (8 ; 80) est une pluralité de boutons surélevés (80) placés de manière périphérique audit passage d'alimentation (5).

11. Plaque (1 ; 1' ; 1''') selon l'une des revendications précédentes, dans laquelle ladite paroi de séparation (3") comprend au moins un bossage de renforcement (24) se projetant par rapport à au moins une parmi lesdites première (3a) et seconde (3b) faces de ladite paroi de séparation (3"), adapté pour augmenter la force mécanique globale de ladite paroi de séparation (3").
